# EUROPÄISCHE PATENTSCHRIFT

(11) **EP 1 091 280 B1**
(45) Veröffentlichungstag und Bekanntmachung des Hinweises auf die Patenterteilung: **11.03.2009**
(21) Anmeldenummer: 00121702.5
(22) Anmeldetag: 04.10.2000
(51) Int. Cl.: G06F 3/00

(54) **Schnittstellenumsetzer zum Anschluss an einen Hardware-Emulator**
Interface connecter for connection to a hardware emulator
Connecteur d'interface pour un émulateur de matériel

(30) Priorität: 05.10.1999 DE 19947838
(43) Veröffentlichungstag der Anmeldung: 11.04.2001
(73) Patentinhaber: SIEMENS AKTIENGESELLSCHAFT, 80333 München (DE)
(72) Erfinder: Bischoff, Hans, Dipl.-Ing., 90530 Wendelstein (DE); Dieckmann, Andreas, Dr., 90602 Pyrbaum/Pruppach (DE); Ulmschneider, Manfred, 90473 Nürnberg (DE)

(56) Entgegenhaltungen:
- US-A- 5 448 717
- US-A- 5 621 651
- US-A- 5 802 348

## Beschreibung

Die Erfindung betrifft einen Schnittstellenumsetzer zum Anschluß an einen Hardware-Emulator.

Auf dem Gebiet des ASIC- oder IC-Designs wird üblicherweise mittels eines Rechners (Personal-Computers oder Workstation) und unter Verwendung einer Hardware-Description-Language (HDL) vorgegeben, welche Funktionen der zu entwickelnde ASIC oder IC im späteren Betrieb durchführen soll. Dazu gehören beispielsweise logische Funktionen und deren Verknüpfung zu mehr oder weniger komplexen Schaltkreisen. Weiterhin benötigt man Synthesewerkzeuge zum Synthetisieren von Codes. Dadurch erhält man eine Netzliste bzw. einen Netzlisten-Code. Dieser enthält Informationen darüber, welche Elemente das zu entwerfende Bauteil aufweist und wie diese Elemente miteinander verschaltet sind.

Mit Hilfe von Simulationen des jeweiligen Schaltungsstandes wird untersucht, ob und wie die genannte Schaltung arbeitet. Mittels dieser Simulation können Fehler erkannt und durch entsprechende Gegenmaßnahmen behoben werden.

Derartige Simulationssysteme, die rein softwaremäßig arbeiten, benötigen im allgemeinen aufwendige CAD-Werkzeuge. Weiterhin haben Simulationssysteme den Nachteil, daß sie sehr langsam arbeiten. Es erweist sich deshalb aufgrund der heute erreichbaren Komplexitäten der Schaltkreise zunehmend als schwierig, die entworfenen Schaltungen in ihren Funktionen mit Hilfe von Simulationen zu verifizieren. Bei heute üblichen Schaltkreisfrequenzen in der Größenordnung von 100 MHz und erreichbaren Simulationsgeschwindigkeiten von 1-10 Hz müßte man beispielsweise für den Start des Betriebssystems Windows NT, welches ungefähr 1-2 Minuten für den Hochlauf benötigt, mindestens 6.500 Tage oder 18 Jahre als Simulationszeit veranschlagen.

Aus diesem Grund wurde bereits vorgeschlagen, Teile der entworfenen Schaltung oder das komplette Design vor der Chip-Produktion auf programmierbare Hardware-Strukturen abzubilden, die auch als Hardware-Emulatoren bezeichnet werden. Derartige Hardware-Emulatoren erlauben einen Betrieb des Designs mit Frequenzen im Bereich von 1 - 10 MHz und gleichzeitig eine Beobachtung interner Schaltungsknoten. Die auf den Hardware-Emulator abgebildete Schaltung kann auch mit ihrer späteren Umgebung, d.h. einer mit anderen Schaltungen bestückten Leiterplatte, kontaktiert und somit in einem realen Schaltungsumfeld verifiziert werden. Sofern die entworfene Schaltung auch Softwareprogramme abarbeiten soll, können diese angesichts der erreichbaren Frequenzen gleichermaßen zur Verifikation genutzt werden.

Die US 5,621,651 offenbart einen Hardware-Emulator, welcher gemeinsame Steuerinformationen an einzelne unterschiedliche Bereiche eines zu emulierenden Schaltkreises aufteilt, dabei werden zusätzliche individuelle Taktsignale für Takt-Domänen der unterschiedlichen Bereiche innerhalb des Schaltkreises bereitgestellt. Ziel der technischen Lehre aus US 5,621,651 ist es verbesserte Simulationsergebnisse bereitzustellen.

Ein Problem entsteht dann, wenn der zu entwerfende ASIC oder IC eine Schnittstelle aufweist, über welche Datenprotokolle mit einer hohen Taktfrequenz übertragen werden sollen. Ein derartiges Protokoll mit hoher Taktfrequenz ist beispielsweise das PCI-Protokoll, welches eine Taktfrequenz von 33 MHz oder 66 MHz hat. Die erreichbaren Frequenzen des Hardware-Emulators liegen im Bereich von 1 - 10 MHz. Um mittels des Emulationssystems die PCI-Schnittstelle des ASIC's oder IC's auf Funktionsfähigkeit überprüfen zu können, bedarf es zusätzlicher Hard- und Software-Strukturen, die die Frequenz des Datentransfers an die mittels des Hardware-Emulators erreichbare Geschwindigkeit anpassen.

Von der Firma App Net Inc. ist unter der Bezeichnung DCPC486 bereits ein Computer zur Realisierung von Emulationen bekannt, der mit einem Verlangsamungskreis (slow-down circuit) versehen ist. Mittels dieses Kreises wird der PCI-Takt von 33 MHz oder 66 MHz verlangsamt, um einen Datentransfer mit einer festen Frequenz von beispielsweise 200 - 1000 KHz zu ermöglichen.

Weiterhin wurden bereits Simulator-Schnittstellen vorgeschlagen, bei denen das notwendige Busprotokoll im Simulator erzeugt wird und die zu übertragenden Daten mit Hilfe zusätzlicher Hardware-Karten und Software zum Emulationssystem transferiert werden. Bei einem derartigen Vorgehen kommt jedoch aufgrund der Verwendung eines Simulators der mittels eines Emulators grundsätzlich erzielbare Geschwindigkeitsgewinn nicht mehr zum Tragen.

Ausgehend von diesem Stand der Technik liegt der Erfindung die Aufgabe zugrunde, einen Weg aufzuzeigen, wie das vorstehend beschriebene Frequenz- bzw. Geschwindigkeitsproblem verringert werden kann.

Diese Aufgabe wird durch einen Schnittstellenumsetzer mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, daß durch den Ersatz der bekannten Simulatorschnittstelle durch eine schnelle Hardware, die zusätzlich mit einer Schnittstellen-Software versehen ist, die Geschwindigkeit des Datentransfers bei gleicher Funktionalität wesentlich erhöht ist. Darüber hinaus ist die Taktfrequenz bzw. der Bustakt frei wählbar, da diese softwaremäßig erzeugt wird. Dies erlaubt es, die Taktfrequenz stets in Abhängigkeit von den jeweiligen Anforderungen des Systems zu wählen. Ferner ist der beanspruchte Schnittstellenumsetzer im Vergleich zu bekannten anderen Hardware-Realisierungen vergleichsweise preisgünstig herzustellen.

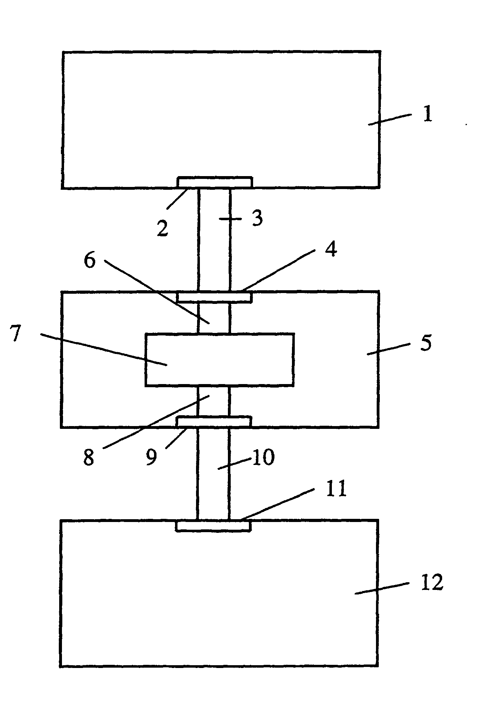

Weitere vorteilhafte Eigenschaften der Erfindung ergeben sich aus der Erläuterung eines Ausführungsbeispiels anhand der Figur. Diese zeigt eine Skizze einer Vorrichtung mit den zum Verständnis der Erfindung notwendigen Elementen.

Ein bereits erstellter Hardware-Emulator 1, auf welchem das komplette Design eines zu entwerfenden ASIC's oder IC's abgebildet ist, weist eine Schnittstelle 2 auf. Diese Schnittstelle 2 entspricht einer Nachbildung eines Anschlusses des ASIC's oder IC's, über welchen im späteren Betrieb des ASIC's oder IC's Daten ausgetauscht werden sollen. Diese Daten weisen ein Datenformat auf, welches einem vorgegebenem Busprotokoll entspricht. Beispielsweise handelt es sich bei diesem Busprotokoll um ein PCI-Busprotokoll, gemäß welchem die auszutauschenden Daten eine Taktfrequenz von 33 MHz oder 66 MHz aufweisen.

Mittels der in der Figur dargestellten Vorrichtung ist es möglich, die Funktionsfähigkeit dieser Schnittstelle 2 der auf den Hardware-Emulator 1 abgebildeten Schaltung zu überprüfen und damit auch ein eventuelles Vorliegen von Fehlern zu erkennen. Dies eröffnet dem Anwender die Möglichkeit, die auf den Hardware-Emulator 1 abgebildete Schaltung, bevor die zugehörige Netzliste dem ASIC- bzw. Halbleiter-Hersteller zum Zwecke der Herstellung eines Chips übergeben wird, nochmals zu überprüfen und gegebenenfalls geeignete Maßnahmen zur Beseitigung des Fehlers in die Wege zu leiten.

Die dargestellte Vorrichtung arbeitet wie folgt:

Da für den Hardware-Emulator 1 die beim PCI-Busprotokoll vorliegende Taktfrequenz von 33 MHz oder 66 MHz zu hoch ist, werden, um eine Überprüfung der Schnittstelle 2 zu ermöglichen, Daten generiert, die dem PCI-Busprotokoll gerecht werden und weiterhin eine Taktfrequenz aufweisen, die an die Arbeitsgeschwindigkeit des Hardware-Emulators 1 angepasst ist.

Bei diesen Daten handelt es sich vorzugsweise um Daten, die den im späteren Betrieb des ASIC's oder IC's auftretenden Daten möglichst ähnlich sind. Da im voraus bereits bekannt ist, in welcher realen Umgebung der entworfene Baustein im späteren Betrieb eingesetzt wird, können im voraus bereits Daten generiert werden, die den später im Betrieb auftretenden Daten sehr ähnlich sind.

Die Erzeugung dieser Daten geschieht unter Verwendung einer Recheneinheit, beispielsweise eines Personal-Computers 12, der mit einer entsprechenden Software versehen ist. Mittels dieser Software wird zusätzlich zu den Daten ein Taktsignal generiert, dessen Frequenz an den jeweils vorliegenden konkreten Anwendungsfall anpaßbar ist.

Die vom Personal-Computer 12 generierten Daten werden zusammen mit dem genannten Taktsignal vorzugsweise über die Druckerschnittstelle 11 des Personal-Computers 12 und über ein Kabel 10 einer programmierbaren Hardware-Struktur 5 zugeführt. Diese nimmt die genannten Daten und das Taktsignal an einer Schnittstelle 9 auf. Von dort aus werden sie über ein Kabel 8 einem FPGA 7 zugeführt, wobei dieses FGPA ein "field programmable gate array" ist. Dabei handelt es sich um eine programmierbare Vorrichtung, welche derart programmiert wurde, daß sie die im Personal-Computer 12 erzeugten Daten, die ein Quellformat aufweisen, in Daten umwandelt, die dem vorgegebenen Ziel-Busprotokoll entsprechen. Beim gezeigten Ausführungsbeispiel ist das Ziel-Busprotokoll das PCI-Busprotokoll.

Die in das PCI-Busprotokoll umgewandelten Daten, die die gewählte, vom jeweiligen Anwendungsfall abhängende Taktfrequenz aufweisen, werden über ein Kabel 6 einer weiteren Schnittstelle 4 der programmierbaren Hardware-Struktur 5 zugeführt. Von dort aus gelangen sie über ein Kabel 3 an die zu überprüfende Schnittstelle 2 der auf den Hardware-Emulator 1 abgebildeten Schaltung.

Anhand des zwischen dem Hardware-Emulator 1 und dem Personal-Computer 12 übertragenen Datenflusses, der vorzugsweise in bidirektionaler Richtung erfolgt, kann nun die Funktionsfähigkeit und das Verhalten der PCI-Schnittstelle 2 der auf den Hardware-Emulator 1 abgebildeten Schaltung überprüft werden. Treten Fehler auf, dann werden diese mittels des Personal-Computers 12 erkannt, so daß beispielsweise durch eine Änderung der Netzliste sowie der Umprogrammierung des Hardware-Emulators 1 oder andere geeignete Gegenmaßnahmen Abhilfe geschaffen werden kann.

Auf der Grundlage der vorstehend beschriebenen Erfindung wurde ein Schnittstellenumsetzer realisiert, der beispielsweise von der Seite eines Personal-Computers 12 her über dessen Druckerschnittstelle 11 im EPP-Modus (enhanced parallel port) angesprochen wird. Als Busprotokoll wurde das PCI-Protokoll gemäß der Norm mit Monomaster- Funktionalität implementiert. Der Hardware-Teil des Schnittstellenumsetzers besteht neben den erforderlichen Anschlüssen aus einem FPGA, auf das die Physik des Schnittstellenumsetzers progammiert wurde, während die Software die Funktion für den Datentransfer sowie einen Treiber umfaßt. Der oben genannte Takt wird mit Hilfe des Treibers generiert und vom vorliegenden Anwendungsprogramm kontrolliert.

Die Performance des Schnittstellenumsetzers ist außer von der Implementierung selbst auch von der Geschwindigkeit des PC-Druckerports oder dem angeschlossenen PCI-Slave abhängig. Im Zusammenhang mit dem oben beschriebenen Ausführungsbeispiel wurde ein Datendurchsatz von 200 - 300 Kbyte pro Sekunde und eine PCI-Frequenz von maximal 700 KHz sowie eine mittlere PCI-Frequenz von 125 KHz erreicht.

Nach alledem basiert die Erfindung darauf, die beispielsweise an einer Schnittstelle eines Personal-Computers ausgegebenen Daten auf das jeweils vorliegende Ziel-Busprotokoll umzusetzen, indem die Physik des Schnittstellenumsetzers mit Hilfe einer Hardware-Beschreibungssprache modelliert wird. Dieses Modell dient dazu, beispielsweise einen programmierbaren Logikbaustein zu programmieren oder auch einen ASIC herzustellen. Gleichzeitig werden Software-Funktionen, beispielsweise in C programmiert, bereitgestellt, um Daten, die mittels des Schnittstellenumsetzers umgesetzt werden, komfortabel eingeben zu können und den Takt des Busses generieren und kontrollieren zu können. Damit kann der Anwender unter Nutzung dieser Funktionen den jeweiligen Bus, der beispielsweise ein PCI-Bus ist, mit Hilfe des Anwenderprogrammes ansteuern und dabei sowohl als Master als auch als Slave auftreten.

Alternativ zum oben beschriebenen Ausführungsbeispiel können anstelle des FPGA 7 auch andere programmierbare Bausteine oder eine spezielle, eigens für die Zwecke der Umsetzung mit Hilfe des HDL-Modells realisierte integrierte Schaltung eingesetzt werden.

## Patentansprüche

1. Schnittstellenumsetzer zum Anschluss an einen Hardware-Emulator (1), welcher einen Datenwandler in Form einer programmierbaren Hardware-Struktur (5) oder eines integrierten Schaltkreises zur Umsetzung von in einem Quellformat eingegebenen Daten in Daten eines vorgegebenen Ziel-Busprotokolls aufweist, wobei zur Eingabe der im Quellformat vorliegenden Daten eine Eingabeeinheit (12) vorhanden ist, **dadurch gekennzeichnet, dass** zusätzlich zu den Daten für das vorgegebene Ziel-Busprotokoll ein Taktsignal generiert wird, dessen Frequenz an das Ziel-Busprotokoll anpassbar ist, wobei eine Taktfrequenz mittels der Eingabeeinheit vorgegeben wird.

2. Schnittstellenumsetzer nach Anspruch 1, **dadurch gekennzeichnet, dass** die Eingabeeinheit (12) ein Personal-Computer ist.

3. Schnittstellenumsetzer nach Anspruch 2, **dadurch gekennzeichnet, dass** der Datenwandler an eine Schnittstelle (11) des Personal-Computers (12) angeschlossen ist.

4. Schnittstellenumsetzer nach Anspruch 3, **dadurch gekennzeichnet, dass** die Schnittstelle (11) die Druckerschnittstelle des Personal-Computers (12) ist.

5. Schnittstellenumsetzer nach einem der vorhergehenden Ansprüche, **dadurch gekennzeichnet, dass** die programmierbare Hardware-Struktur (5) mindestens ein FPGA (field programmable gate array) aufweist.

6. Schnittstellenumsetzer nach einem der vorhergehenden Ansprüche, **dadurch gekennzeichnet, dass** das vorgegebene Ziel-Busprotokoll das PCI-Busprotokoll ist.

7. Schnittstellenumsetzer nach einem der vorhergehenden Ansprüche, **dadurch gekennzeichnet, dass** er über ein erstes Kabel (3) mit einer Schnittstelle (2) der auf den Hardware-Emulator (1) abgebildeten Schaltung verbindbar ist.

8. Schnittstellenumsetzer nach Anspruch 7, **dadurch gekennzeichnet, dass** über das erste Kabel (3) eine bidirektionale Datenübertragung erfolgt.

9. Schnittstellenumsetzer nach einem der Ansprüche 2 bis 8, **dadurch gekennzeichnet, dass** er ein zweites Kabel (10) aufweist, mittels dessen der Datenwandler mit der Schnittstelle (11) des Personal-Computers (12) verbindbar ist.

10. Schnittstellenumsetzer nach einem der vorhergehenden Ansprüche, **dadurch gekennzeichnet, dass** der Hardware-Emulator (1) zur Nachbildung der Funktionen eines integrierten Schaltkreises oder eines anwenderspezifischen integrierten Schaltkreises dient.

11. Schnittstellenumsetzer nach einem der vorhergehenden Ansprüche, **dadurch gekennzeichnet, dass** er Masterfunktion aufweist.

12. Schnittstellenumsetzer nach einem der vorhergehenden Ansprüche, **dadurch gekennzeichnet, dass** er Slavefunktion aufweist.

## Claims

1. Interface connector for connection to a hardware emulator (1), which has a data converter in the form of a programmable hardware structure (5) or an integrated switching circuit for converting data input in a source format into data of a predetermined target bus protocol, with an input unit (12) being present for inputting the data present in the source format, **characterised in that** in addition to the data for the predetermined target bus protocol, a clock signal is generated, the frequency of which can be adjusted to the target bus protocol, with a clock frequency being predetermined by means of the input unit.

2. Interface connector according to claim 1, **characterised in that** the input unit (12) is a personal computer.

3. Interface connector according to claim 2, **characterised in that** the data converter is connected to an interface (11) of the personal computer (12).

4. Interface connector according to claim 3, **characterised in that** the interface (11) is the printer interface of the personal computer (12).

5. Interface connector according to one of the preceding claims, **characterised in that** the programmable hardware structure (5) has at least one FPGA (field programmable gate array).

6. Interface connector according to one of the preceding claims, **characterised in that** the predetermined target bus protocol is the PCI bus protocol.

7. Interface connector according to one of the preceding claims, **characterised in that** it can be connected to an interface (2) of the circuit mapped on the hardware emulator (1) by way of a first cable (3).

8. Interface connector according to claim 7, **characterised in that** a bidirectional data transmission takes place by way of the first cable (3).

9. Interface connector according to one of claims 2 to 8, **characterised in that** it has a second cable (10), by means of which the data converter can be connected to the interface (11) of the personal computer (12).

10. Interface connector according to one of the preceding claims, **characterised in that** the hardware emulator (1) is used to map the functions of an integrated circuit or a user-specific integrated circuit.

11. Interface connector according to one of the preceding claims, **characterised in that** it has a master function.

12. Interface connector according to one of the preceding claims, **characterised in that** it has a slave function.

## Revendications

1. Convertisseur d'interface qui est destiné au raccordement à un émulateur matériel ( 1 ) et qui comporte un convertisseur de données sous la forme d'une structure matérielle programmable ( 5 ) ou d'un circuit intégré pour la conversion de données entrées dans un format source en données d'un protocole de bus cible prédéterminé, une unité d'entrée ( 12 ) étant prévue pour l'entrée des données présentes dans le format source, **caractérisé par le fait que**, en plus des données pour le protocole de bus cible prédéterminé, un signal d'horloge dont la fréquence est adaptable au protocole de bus cible est produit, une fréquence d'horloge étant prescrite au moyen de l'unité d'entrée.

2. Convertisseur d'interface suivant la revendication 1, **caractérisé par le fait que** l'unité d'entrée ( 12 ) est un ordinateur personnel.

3. Convertisseur d'interface suivant la revendication 2, **caractérisé par le fait que** le convertisseur de données est raccordé à une interface ( 11 ) de l'ordinateur personnel (12).

4. Convertisseur d'interface suivant la revendication 3, **caractérisé par le fait que** l'interface ( 11 ) est l'interface d'imprimante de l'ordinateur personnel ( 12 ).

5. Convertisseur d'interface suivant l'une des revendications précédentes, **caractérisé par le fait que** la structure matérielle programmable ( 5 ) comporte au moins un FPGA (field programmable gate array).

6. Convertisseur d'interface suivant l'une des revendications précédentes, **caractérisé par le fait que** le protocole de bus cible prédéterminé est le protocole de bus PCI.

7. Convertisseur d'interface suivant l'une des revendications précédentes, **caractérisé par le fait qu'**il peut être relié par l'intermédiaire d'un premier câble (3) à une interface ( 2 ) du circuit reproduit sur l'émulateur matériel ( 1 ).

8. Convertisseur d'interface suivant la revendication 7, **caractérisé par le fait qu'**une transmission bidirectionnelle de données s'effectue par l'intermédiaire du premier câble ( 3 ).

9. Convertisseur d'interface suivant l'une des revendications 2 à 8, **caractérisé par le fait qu'**il comporte un deuxième câble (10) au moyen duquel le convertisseur de données peut être relié à l'interface ( 11 ) de l'ordinateur personnel ( 12 ).

10. Convertisseur d'interface suivant l'une des revendications précédentes, **caractérisé par le fait que** l'émulateur matériel ( 1 ) sert à la reproduction des fonctions d'un circuit intégré ou d'un circuit intégré spécifique à l'utilisateur.

11. Convertisseur d'interface suivant l'une des revendications précédentes, **caractérisé par le fait qu'**il a une fonction de maître.

12. Convertisseur d'interface suivant l'une des revendications précédentes, **caractérisé par le fait qu'**il a une fonction d'esclave.
